# EUROPÄISCHE PATENTSCHRIFT

(11) **EP 3 113 122 B1**
(45) Veröffentlichungstag und Bekanntmachung des Hinweises auf die Patenterteilung: **18.11.2020**
(21) Anmeldenummer: 16176102.8
(22) Anmeldetag: 24.06.2016
(51) Int. Cl.: G07F 7/06, G06Q 30/02, B65G 23/44

(54) **RÜCKNAHMESYSTEM FÜR ZU ENTWERTENDE EINWEGGÜTER UND VORRICHTUNG SOWIE VERFAHREN ZUR MANIPULATIONSERKENNUNG AN DEMSELBEN**
REVERSE VENDING SYSTEM FOR DISPOSABLE GOODS TO BE REDEEMED AND METHOD FOR DETECTING MANIPULATIONS OF THE SAME
SYSTEME DE REPRISE DE PRODUITS JETABLES A VALORISER ET DISPOSITIF ET PROCEDE DE RECONNAISSANCE DE MANIPULATION DE CES DERNIERS

(30) Priorität: 30.06.2015 DE 102015110545
(43) Veröffentlichungstag der Anmeldung: 04.01.2017
(73) Patentinhaber: Wincor Nixdorf International GmbH, 33106 Paderborn (DE)
(72) Erfinder: Boymann, Simon, 98693 Ilmenau (DE); Fischer, Arno, 4020 Linz (AT); Frank, Gabriella, 99310 Arnstadt (DE); Koppe, André, 98544 Zella-Mehlis (DE)

(56) Entgegenhaltungen:
- EP-A1- 3 065 112
- EP-A2- 2 287 813
- DE-A1- 10 063 368
- US-A- 4 285 426
- US-A- 5 111 927
- US-A- 5 997 423
- US-A1- 2008 296 374
- US-A1- 2011 206 369
- US-A1- 2012 173 014
- Anonymous: "Drehmomentaufnehmer - Wikipedia", , 6. August 2014 (2014-08-06), XP055306780, Gefunden im Internet: URL:https://de.wikipedia.org/w/index.php?t itle=Drehmomentaufnehmer&oldid=132823987 [gefunden am 2016-09-30]

## Beschreibung

Die Erfindung betrifft ein Rücknahmesystem für zu entwertende Einweggüter, insbesondere ein Pfandrücknahmesystem für Gebinde, wie Flaschen, Dosen oder dergleichen. Des Weiteren betrifft die Erfindung eine Vorrichtung und ein Verfahren zur Manipulationserkennung an einem solchen Rücknahmesystem.

Rücknahmesysteme, die insbesondere für pfandpflichtige Einweggüter konzipiert sind und kurz auch als RVS (reverse vending systems) bezeichnet werden, sind hinlänglich bekannt und werden häufig als Automaten oder automatische Annahmeanlagen installiert. Üblicherweise umfasst ein RVS eine Fronteinheit, in die das Einweggut eingegeben wird und dann über eine Transport- und Sortierstrecke zu einem Kompaktor bzw. Verdichter befördert wird. Der Kompaktor enthält eine Entwertungseinheit, die das eingegebene Einweggut irreversibel zerstört und auf ein möglichst geringes Volumen verkleinert bzw. komprimiert. Das Zerstören des Einweggutes erfolgt häufig mittels Schneidwalzen, die eng zueinander beabstandet sind und gegenläufig rotieren. Das zerstörte und komprimierte Einweggut wird in einem Behälter gesammelt und steht zum Abtransport an eine Recyclingeinrichtung bereit. Dem Benutzer des RVS wird der Pfandbetrag des eingegebenen Einweggutes gutgeschrieben.

Aus der US 2008 / 296374 A1 ist ein Rücknahmesystem für zu entwertende Einweggüter bekannt (s. dort Titel und Abstract "Recycling Kiosk System" sowie Text [0008]). Das Rücknahmesystem enthält eine Entwerteeinheit mit einem Kompaktor (s. [0098]) zum Zerstören der Einweggüter. Des Weiteren enthält das System zur Manilpulationserkennung mindestens ein Sensorelement (s. [0097] "load determing device") und eine Auswerteeinheit ("..configured to determine the difference between the "after" weight and the "before" weight in the storage container... ").

Demnach sind für zu entwertende Einweggüter Rücknahmesysteme bekannt, die mit einer Entwertungseinheit zum Zerstören der zu entwertenden Einweggüter ausgestattet sind. Leider kommt es nicht selten zu Manipulationen solcher Rücknahmesysteme dergestalt, dass in betrügerischer Absicht einzelne Einweggüter bzw. Gebinde innerhalb der Transport- und Sortierstrecke zwischen der Fronteinheit und dem Kompaktor bzw. der Entwertungseinheit abgefangen und erneut der Fronteinheit zugeführt wird. Dabei macht der Betrüger sich die Gegebenheit zu Nutze, dass üblicherweise die Erfassung bzw. Identifizierung des Einweggutes und die Gutschreibung des Pfands bereits innerhalb der Fronteinheit erfolgt. Somit kann das Pfand des Einweggutes mehrfach gutgeschrieben werden, was schließlich auf Seiten des Betreibers des RVS zu erheblichen finanziellen Verlusten führen kann.

Bereits ist es bekannt, dass zur Vermeidung solcher Betrugsversuche Sensoren an der Transport- und Sortierstrecke angeordnet werden, um ein widerrechtliches Entnehmen von Einweggut aus dem RVS zu erkennen. Allerdings gibt es seit Neuerem auch schon Betrugsversuche, bei denen derartige Sensoren manipuliert und außer Funktion gesetzt werden.

Das Dokument EP 3 065 112 A1 ist als Stand der Technik im Sinne des Art. 54(3) EPÜ zu nennen, da dort eine Lösung zur Erkennung derartiger Manipulationen offenbart wird. In diesem Dokument wird ein Rücknahmesystem offenbart mit einer Entwertungseinheit zum Zerstören der zu entwertenden Einweggüter, wobei zur Manipulationserkennung mindestens ein Sensorelement zur Erfassung mindestens einer Kenngröße und eine Auswerteeinheit vorgesehen sind, wobei die Auswerteeinheit die Kenngröße, nämlich den beim mechanischen Zerstören des jeweiligen Einweggutes entstehenden Schall, auswertet, um zu prüfen, ob das Einweggut von der Entwertungseinheit wirklich zerstört wird, wobei die Auswerteeinheit auch eine Steuerungsfunktion für das Rücknahmesystem oder für Komponenten davon ausübt, und wobei die Auswerteeinheit ein Steuerungssignal, eine Fehlermeldung und/oder einen Alarm erzeugt, wenn die Prüfung ergibt, dass das Einweggut von der Entwertungseinheit nicht in regulärer bzw. bestimmungsgemäßer Weise zerstört wird, obwohl eine Sensorik anzeigt, dass dem Rücknahmesystem das zu entwertende Einweggut zugeführt worden ist.

Es ist daher Aufgabe der Erfindung, ein Rücknahmesystem so zu verbessern, dass die eingangs genannten Manipulations- und Betrugsversuche effektiv verhindert werden. Insbesondere sollen dazu eine Vorrichtung und ein Verfahren zur Manipulationserkennung an einem Rücknahmesystem entwickelt und vorgestellt werden. Zudem soll das Rücknahmesystem sich neuheitlich von dem in EP 3 065 112 A1 offenbarten Stand der Technik im Sinne des Art. 54(3) EPÜ unterscheiden.

Die Aufgabe wird gelöst durch ein Rücknahmesystem mit den Merkmalen des Anspruchs 1 und durch eine Vorrichtung sowie ein Verfahren mit den Merkmalen der unabhängigen Ansprüche, wobei im Unterschied zu EP 3 065 112 A1 als Kenngröße kein Schall erfasst wird.

Demnach ist das mindestens eine Sensorelement so gestaltet, dass es mindestens eine mechanische Kenngröße, ausgenommen Schall, erfasst, welche für den Betrieb der Entwertungseinheit während des Zerstörens eines Einweggutes kennzeichnend ist, und die Auswerteeinheit ist beschaffen, die mindestens eine Kenngröße auszuwerten, um zu prüfen, ob das Einweggut von der Entwertungseinheit zerstört wird. Außerdem übt die Auswerteeinheit auch eine Steuerungsfunktion für das Rücknahmesystem oder für Komponenten davon aus und erzeugt ein Steuerungssignal, eine Fehlermeldung und/oder einen Alarm erzeugt, wenn die Prüfung ergibt, dass das Einweggut von der Entwertungseinheit nicht in regulärer bzw. bestimmungsgemäßer Weise zerstört wird, obwohl eine Sensorik anzeigt, dass dem Rücknahmesystem das zu entwertende Einweggut zugeführt worden ist.

Vorzugsweise ist das mindestens eine Sensorelement in Nähe oder direkt an der Entwertungseinheit selbst angeordnet, um die mindestens eine Kenngröße zu erfassen, wobei die Auswerteeinheit beispielsweise durch Vergleich mit Referenzen prüft, ob die Kenngröße(n) einen für den Zerstörungsvorgang normalen bzw. regulären Betrieb der Entwertungseinheit anzeigen oder nicht.

Die hier vorgestellte Vorrichtung ist zum Einbau in ein solches Rücknahmesystem beschaffen und weist mindestens ein (vorzugsweise an der Entwertungseinheit angeordnetes) Sensorelement auf, das mindestens eine Kenngröße, ausgenommen Schall, erfasst, die für den Betrieb der Entwertungseinheit während des Zerstörens eines Einweggutes kennzeichnend ist, und weist eine Auswerteeinheit auf, welche die mindestens eine Kenngröße auswertet, um zu prüfen, ob das Einweggut von der Entwertungseinheit in regulärer Weise zerstört wird.

Das hier vorgestellte Verfahren zum Betrieb eines solchen Rücknahmesystems umfasst einen ersten Schritt, bei dem mittels mindestens eines Sensorelements mindestens eine mechanische Kenngröße, ausgenommen Schall, erfasst wird, die für den Betrieb der Entwertungseinheit während des Zerstörens eines Einweggutes kennzeichnend ist, und umfasst einen zweiten Schritt, bei dem mittels einer Auswerteeinheit die mindestens eine Kenngröße ausgewertet wird, um zu prüfen, ob das Einweggut von der Entwertungseinheit zerstört wird. In einem weiteren Schritt wird für die Entwertungseinheit bzw. das ganze RVS ein Steuerungssignal, eine Fehlermeldung und/oder einen Alarm erzeugt, wenn die Prüfung ergibt, dass das Einweggut von der Entwertungseinheit nicht in regulärer bzw. bestimmungsgemäßer Weise zerstört wird, obwohl eine Sensorik (in der Fronteinheit) anzeigt, dass dem Rücknahmesystem das zu entwertende Einweggutes zugeführt worden ist. Beispielsweise kann das RVS dann komplett abgeschaltet werden. Dabei kann die Fehlermeldung an eine das RVS überwachende Einheit übertragen werden. Oder es kann der Alarm ausgelöst werden.

Die hier vorgestellte Lösung nimmt für die Entwertungseinheit charakteristische Sensorsignale bzw. -daten auf, die unmittelbar den Betriebszustand der Entwertungseinheit bzw. eines darin befindlichen Schneidwerks anzeigen und eine sichere Auswertung ermöglichen, ob die Zerstörung von Einweggut tatsächlich und in bestimmungsgemäßer Weise ausgeführt wird, wenn zuvor in der Fronteinheit erkannt wurde, dass ein zu entwertendes pfandpflichtiges Einweggut zugeführt worden ist. Selbst wenn unter Manipulation einer evtl. an der Transportstrecke vorhandenen Sensorik das erkannte Einweggut widerrechtlich entnommen werden sollte, wird (vorzugsweise an der Entwertungseinheit selbst) erkannt, dass keine ordentliche Zerstörung des Einwegguts erfolgt und es können Maßnahmen, wie z.B. Steuerung des RVS und/oder Erzeugung einer Fehlermeldung und/oder eines Alarm ausgelöst werden.

Diese und weitere vorteilhafte Weiterbildungen der Erfindung ergeben sich auch aus den abhängigen Ansprüchen:
Demnach ist es vorteilhaft, wenn die Auswerteeinheit die mindestens eine erfasste Kenngröße und deren Änderung über einen Zeitraum hin anhand von Referenzdaten auswertet. Somit wird ein zeitlicher Verlauf der jeweiligen Kenngröße (z.B. Strom oder Drehmoment des Schneidwerks) erfasst und mit Referenz(en) verglichen, die eine eindeutige Klassifizierung des Betriebsverhaltens erlaubt. Abnormes Verhalten kann sofort und zuverlässig erkannt werden; und es können Gegenmaßnahmen veranlasst werden.

Als Sensorelemente können alle Arten von sensorischen Bauteilen zum Einsatz kommen, insbesondere optische, elektrische, magnetische und/oder elektromechanische Sensorelemente. Beispielsweise können Sensoren zur Strommessung (z.B. Motorstrom des Schneidwerk-Antriebs) eingesetzt werden. Auch mechanische bzw. elektromechanische Sensoren sind je nach Anwendungsfall vorteilhaft, z.B. für eine Momenten- oder Kraftmessung (die z.B. mehrmals an verschiedenen Stellen erfolgen kann) oder auch für eine Wegmessung (z.B. Auslenkung der Antriebsketten). Ebenso kann auch der Einsatz von optischen Sensoren vorteilhaft sein. Dazu zählen auch Kameras, Lichtschranken, Lichttaster oder Lichtgitter. Zu nennen sind z.B. auch pneumatische Sensoren oder druckempfindliche Sensoren, wie z.B. Piezosensoren. Die Sensoren können statische wie auch dynamische Messungen durchführen. Insbesondere ist eine Erfassung von (sehr) unterschiedlichen Kenngrößen, die kaum oder nicht miteinander korrelieren interessant, um die Auswertung zu verbessern bzw. Ergebnisse zu validieren.

Vorzugsweise sind an der Entwertungseinheit, insbesondere in einem Gehäuse mindestens zwei Sensorelemente angeordnet, die unterschiedliche Kenngrößen erfassen. Somit wird bevorzugt eine zwei- oder mehrfache und mannigfaltige Sensorik eingesetzt, um die Auswertung des Betriebsverhaltens der Entwertungseinheit noch weitgehender zu sichern.

In einer bevorzugten Ausführungsform weist die Entwertungseinheit mindestens zwei Schneidwalzen auf, an deren Lagerung ein erstes Sensorelement angeordnet ist, das eine mechanische Kenngröße, insbesondere eine zwischen den Schneidwalzen sich ausbildende Kraft, erfasst. Alternativ oder zusätzlich dazu kann auch ein die Schneidwalzen antreibender Antrieb, insbesondere ein Kettentrieb, überwacht werden, indem dort ein (zweites) Sensorelement angeordnet ist, wobei dieses Sensorelement eine mechanische Kenngröße, insbesondere eine Kettenspannung des Kettentriebs, erfasst.

Um generell den Betrügern den Zugang zu sensitive Komponenten zu erschweren, kann zusätzlich ein Schutzelement vorgesehen werden, wobei vorzugsweise zwischen mindestens zwei Komponenten des Rücknahmesystems, insbesondere zwischen der Entwertungseinheit und dem Gehäuse für das mindestens eine Sensorelement, ein solches Schutzelement, insbesondere ein Lichtwellenleiter oder eine elektrische Signalleitung, so angeordnet wird, dass dieses Schutzelement bei einem Manipulationsversuch an dem Rücknahmesystem durchtrennt oder zumindest beschädigt wird.

Als weitere Ausgestaltungen und Vorteile sind hier zu nennen:
Mittels einer generellen Gehäuseüberwachung (z.B. über ein wie oben beschriebenes Schutzelement), welche z. B. über eine Pufferbatterie gespeist wird, ist es möglich, Manipulation auch im stromlosen Zustand des RVS zu erkennen.

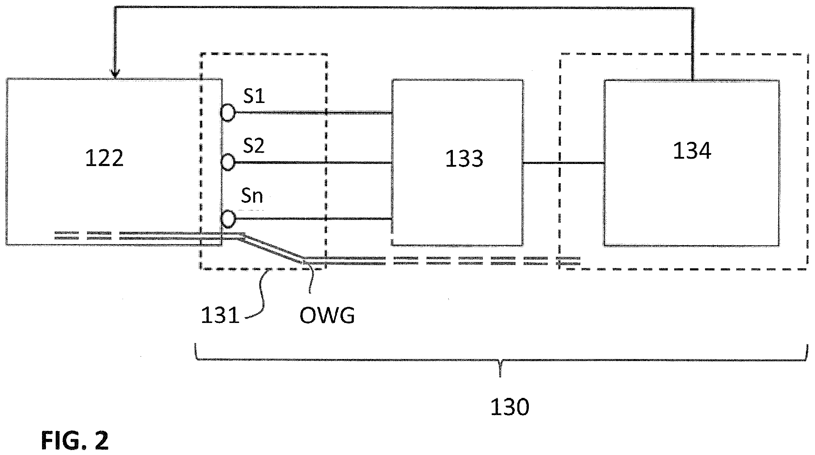

Es kann auch vorgesehen werden, die Sensoren (siehe S1-SN in Fig. 2) über die Signalverarbeitungseinheit (z.B. Mikro-Kontroller) zeitweise zu deaktivieren, um dann zu verifizieren, dass kein Sensorsignal abgegeben wird. Sollte dennoch ein solches Signal vorhanden sein, so ist davon auszugehen, dass eine Manipulation erfolgt ist, bei der anstelle (einzelner oder aller) Sensoren eingeschleuste Signalgeber (also vortäuschende Fake-Sensoren) vorhanden sind.

Die mit Hilfe der über die Sensoren erfassten Messsignale können zudem auch noch folgende Anforderungen erfüllt werden:
- Leerlauf des Schneidwerks erkennen; insbesondere charakteristische Leerlaufsignale;
- Aktivitässignale sicher und unterscheidbar von den Leerlaufsignalen erkennen;
- Nullsignal erkennen, d.h. dass ein Sensor fehlt oder deaktiviert ist;
- Alterung der Schneidwerke erkennen und bewerten
- Manipulationsschutz durch Vergleich (Rückkopplung) aus RVS-Sensoren (Streckensensoren) und Schneidwerksaktivität; dies hat den Vorteil, dass die Transportstrecke(n) des RVS nicht überwacht werden müssen.

Diese und weitere Merkmale sowie Vorteile der Erfindung werden auch anhand der nachfolgenden Beschreibung von Ausführungsbeispielen verdeutlicht, wobei auf die beiliegenden schematischen Zeichnungen Bezug genommen wird, die folgendes darstellen:
- Fig. 1: zeigt den Aufbau eines Rücknahmesystems für pfandpflichtige Einweggüter;
- Fig. 2: zeigt eine in das Rücknahmesystem einbaubare Vorrichtung zur Manipulationserfassung mittels Sensoren;
- Fig. 3: zeigt im Detail die Anordnung eines Sensors an einem Antrieb für ein Schneidwerk innerhalb des Rücknahmesystems;
- Fig. 4: zeigt im Detail die Anordnung eines (weiteren) Sensors an einer Schneidwalze des Schneidwerks innerhalb des Rücknahmesystems;
- Fig. 5: zeigt zur Veranschaulichung der Sensorsignal-Auswertung exemplarisch den Verlauf zweier von den Sensoren erfasster Messsignale; und
- Fig. 6: entspricht einem Ablaufdiagramm für ein Verfahren zur Manipulationserkennung an dem Rücknahmesystem nach Fig. 1.

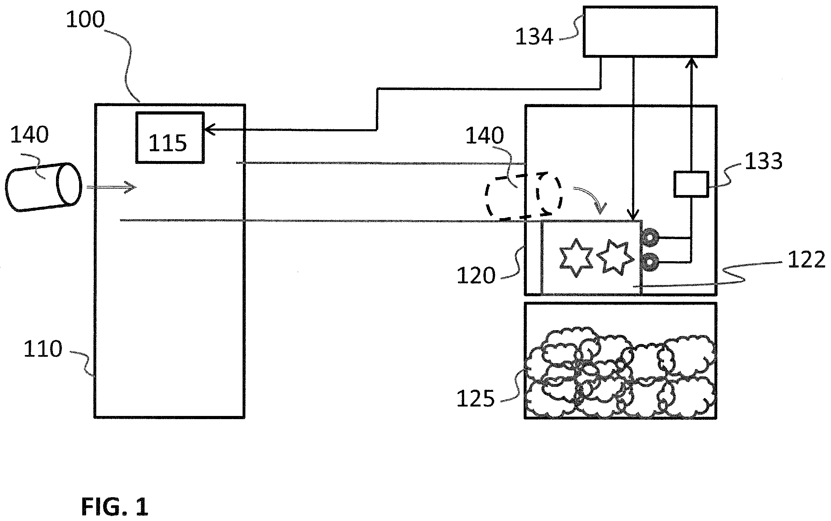

Zunächst wird auf die Figur 1 Bezug genommen, die schematisch den Aufbau eines Rücknahmesystems 100 für zu entsorgende Einweggüter 140 darstellt. Bei dem Einweggut 140 kann es sich insbesondere um Plastik- bzw. PET-Flaschen und Dosen handeln. Das Rücknahmesystem 100 umfasst eine Fronteinheit 110, in welche über eine Eingabeöffnung das jeweilige Einweggut von dem Benutzer eingeführt wird. Das Rücknahmesystem 100, im Weiteren auch kurz mit RVS (reverse vending system) bezeichnet, weist innerhalb der Fronteinheit 110 eine Sensorik 115 auf, mit der das eingegebene Einweggut 140 geprüft und festgestellt wird, ob es ein pfandpflichtiges Gebinde ist oder nicht. Dazu wird an dem Einweggut 140 nach einem Identifizierungs- bzw. Erkennungsmerkmal, wie beispielsweise einem Strichcode, gesucht. Wird ein solcher Strichcode erkannt, so kann des Weiteren auch ermittelt werden, um welche Einweggutart es sich handelt und wie hoch der gutzuschreibende Pfandbetrag ist. Wenn diese erste Prüfung positiv ausgefallen ist und der Pfandbetrag gutgeschrieben worden ist (z.B. per Wertcoupon), dann wird das Eingabegut 140 über eine Transport- und Sortierstrecke einem Kompaktor 120 zugeführt, der ggf. auch räumlich (weit) entfernt von der Fronteinheit 110 montiert sein kann.

In dem Kompaktor 120 soll dann das Einweggut 140 innerhalb einer Entwertungseinheit 122 (möglichst irreversibel) zerstört werden. Hierzu wird insbesondere das Volumen des Einweggutes über ein Schneidwerk reduziert und vorzugsweise werden gleichzeitig auch die Sicherheitsmerkmale (Strichcode etc.) zerstört. Somit können die Einweggüter 140 nach dem Durchlaufen durch den Kompaktor 120 nicht erneut der Fronteinheit 110 zugeführt werden. Insofern ist ein Betrugsversuch nicht mehr durchführbar. Die kompaktierten Einweggüter 140 werden schließlich in einen Behälter 129 entsorgt, der regelmäßig entleert wird. Wie die Fig. 1 zeigt, wird das über die Fronteinheit 110 eingegebene Einweggut 140 über eine Transport- bzw. Sortierstrecke zu dem Kompaktor 120 transportiert. Hier wären jedoch noch Betrugsversuche möglich, bei denen das Einweggut 140 aus der Sortierstrecke entnommen und der Fronteinheit 110 erneut zugeführt würde. Um auch solche Betrugsversuche effektiv zu unterbinden, wird erfindungsgemäß an der Entwertungseinheit 122 selbst, insbesondere an einem darin befindlichen Schneidwerk, eine Erfassung von Kenngrößen durchgeführt, die kennzeichnend sind für einen normalen, regulären Betrieb der Entwertungseinheit 122. Somit kann sicher geprüft und überwacht werden, ob das von der Sensorik 115 zur Entwertung bestimmte Einweggut 140 tatsächlich das Schneidwerk erreicht und dort ordentlich kompaktiert wird. Dies wird durch die im Weiteren näher beschriebene Vorrichtung zur Manipulationserkennung erreicht.

Anhand der Fig. 2 wird der Aufbau einer solchen Vorrichtung 130 verdeutlicht: An der Entwertungseinheit 122 bzw. dem darin verbauten Schneidwerk werden vorzugsweise mehrere Sensoren S1, S2 ... Sn angeordnet, um typische Kenngrößen zu erfassen und auszuwerten, wie z.B. Drehmomente, Kräfte, Motorströme, die beim Vorgang des Kompaktierens auftreten. Im vorliegenden Beispiel werden exemplarisch zwei Sensoren S1 und S2 eingesetzt, deren Signale von einer Signalverarbeitungseinheit 133 aufgenommen und gemessen werden, die z.B. durch einen Mikro-Controller realisiert werden kann. Hier wird vornehmlich eine Signalaufbereitung durchgeführt. Nachgeschaltet ist eine Auswerteeinheit 134 mittels der die Auswertung der erfassten Sensor-Signale bzw. -Daten erfolgt, um zu prüfen, ob ein ordentlicher Schneidwerkbetrieb durchgeführt wird oder nicht. Die Auswerteeinheit kann auch mittels einer auf einem Rechner oder PC laufenden Applikation realisiert werden. Diese kann auch Steuerungsfunktionen für das RVS ausführen. Je nach Ergebnis der Auswertung reagiert die Auswerteeinheit 134 mit der Erzeugung von Steuerungssignalen, Fehlermeldungen und/oder Alarmsignalen an das RVS oder an andere das RVS überwachende Einheiten.

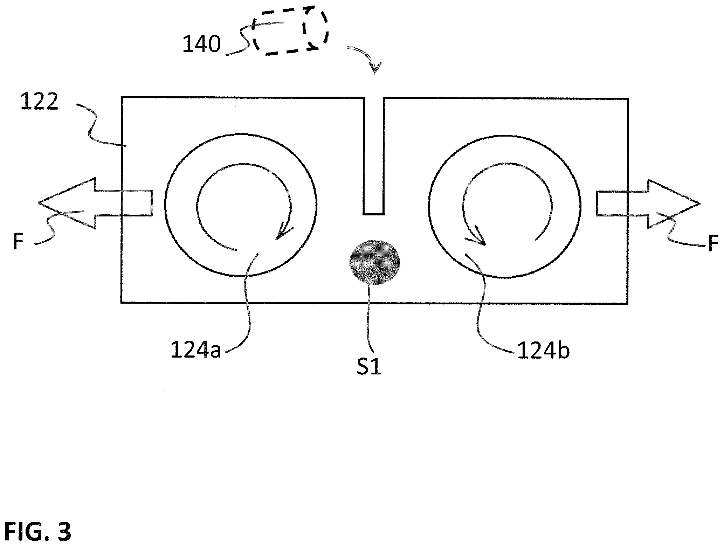

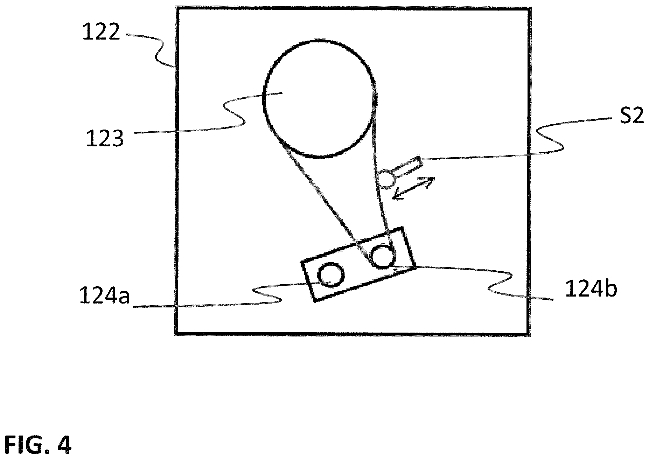

Die Fig. 3 und 4 veranschaulichen exemplarisch zwei mögliche Realisierungsarten zur Erfassung und kombinatorischen Auswertung von Kenngrößen, die einen regulären Schneidwerkbetrieb kennzeichnen:
In der Fig. 3 ist das Schneidwerk 122 (als integrales Teil der Entwertungseinheit) schematisch dargestellt, wobei zwei gegeneinander rotierende Schneidwalzen 124a und 124b das zu entsorgende und zu entwertende Einweggut 140 erfassen und kompaktieren. Während eines regulär betriebenen Schneid- bzw. Kompaktiervorgangs treten Kräfte F auf, die auch auf die Lagerung des Schneidwerks wirken und somit über einen ersten Sensor S1 erfasst werden können, z.B. über einen Dehnungs-Mess-Streifen.

In der Fig. 4 ist dargestellt, dass das Schneidwerk 122 einen Antrieb 123 in Form eines Kettentriebs aufweist, wobei über einen zweiten Sensor S2 die aktuelle Kettenspannung erfasst und gemessen wird. Als Sensor S2 eignet sich hier z.B. ein Wegesensor.

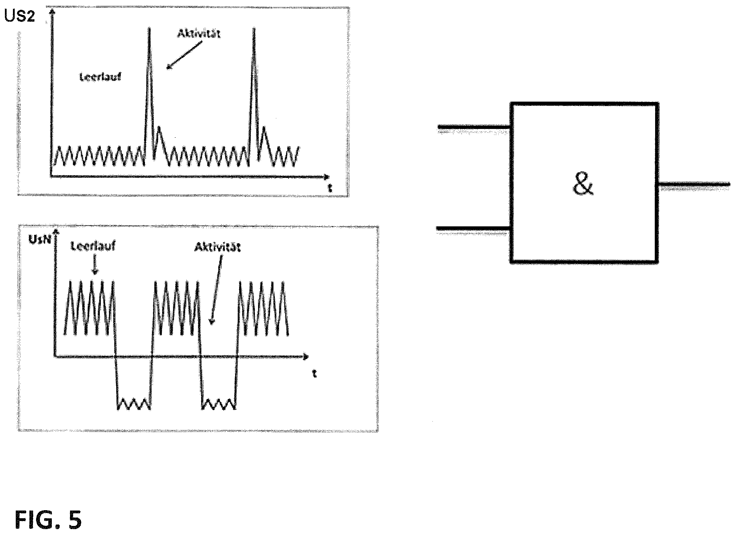

In der Fig. 5 ist ein oberer zeitlicher Signalverlauf dargestellt, der sich auf ein Sensorsignal bezieht, das z.B. von dem Sensor S2 (siehe Fig. 4) geliefert wird. Anhand von einzelnen Signalspitzen ist erkennbar, dass die Kettenspannung des Antriebsmotors kurzfristig ansteigt, was z.B. das jeweilige Anfangsmoment beim Eintritt eines noch nicht kompaktierten Einwegguts 140 in das Schneidwerk kennzeichnet. Der untere Signalverlauf kennzeichnet eine andere Kenngröße, die ebenfalls anzeigen kann, ob das Schneidwerk regulär arbeitet oder nicht. Durch eine kombinatorische Auswertung, die symbolisch durch eine logische UND-Verknüpfung repräsentiert wird, kann eine Signalauswertung bzw. Klassifizierung weiter verbessert werden, weil hierdurch der eine Signalverlauf durch den anderen verifiziert werden kann. Die zwei oder mehr gemessenen Sensorsignale liefern eine gegenseitige Plausibelisierung. Als Kombination können alle geeigneten Arten von (logischen) Verknüpfungen dienen, insbesondere UND- oder ODER-Operationen; auch sind gewichtete Kombination denkbar. Die Signalverarbeitung und Auswertung erfolgt vorzugsweise in den in Fig. 2 dargestellten Einheiten 133 und 134. Dazu wird auch auf Referenzdaten bzw. -signalverläufen zurückgegriffen, die in Speichereinheiten abgelegt sind.

Hat die Auswerteeinheit 134 (die auch eine Steuerungsfunktion ausüben kann) eine relevante Abweichung zwischen dem Ist-Signalverlauf und dem normalen Soll-Signalverlauf festgestellt, die so groß ist, dass auf einen Manipulationserkennung bzw. Betrugsversuch zurückgeschlossen werden kann, so nimmt die Auswerte- und Steuerungseinheit 134 das RVS 100 außer Betrieb und/oder erzeugt eine Fehler- bzw. Alarmmeldung.

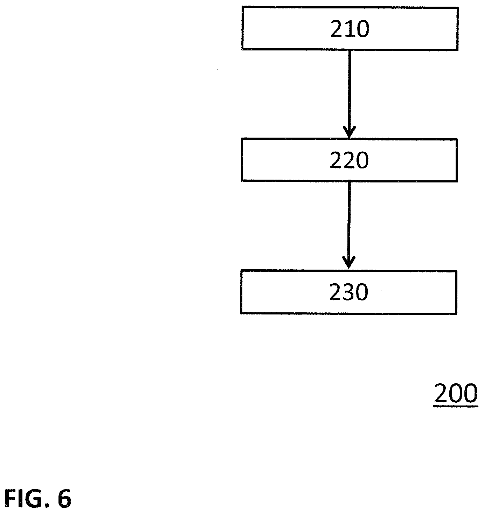

Das zur Manipulationserkennung durchgeführte Verfahren 200 wird anhand der Fig. 6 in Form eines Ablaufdiagramms dargestellt:
In einem ersten Schritt 210 werden die sensorisch gemessenen Kenngrößen erfasst und der Auswertung zugeführt. Dann werden in einem zweiten Schritt 220 mittels der Auswerteeinheit 134 die mehreren Kenngrößen ausgewertet, um zu prüfen, ob das Einweggut 140 von der Entwertungseinheit 122 tatsächlich zerstört wird. In einem optionalen Schritt 130 wird dann ggfs. ein Steuersignal, eine Fehlermeldung und/oder ein Alarm erzeugt, wenn die Prüfung ergibt, dass das Einweggut von der Entwertungseinheit nicht zerstört wird, obwohl die eingangsseitige Sensorik 115 anzeigt, dass dem Rücknahmesystem 100 das zu entwertende Einweggutes 140 zugeführt worden ist.

Zusammenfassend werden Vorrichtungen und Verfahren zur manipulationssicheren sensorischen Überwachung des physikalischen Zerstörungsprozesses von werthaltigen Symbolen auf pfandbehafteten Objekten offenbart.

Die vorliegende Erfindung löst das Problem, dass das Rücknahmesystem, kurz RVS, Teil einer Kette zur Abrechnung von Pfandbeträgen ist, wobei die Aufgabe des RVS darin liegt, unter anderem, das werthaltige Pfandlogo zu zerstören und als Ersatz einen werthaltigen Datensatz anzulegen, der zur Verrechnung des Pfandwertes verwendet werden kann. Herkömmliche Systeme für Pfandausgleich sind aber korrumpiert, wenn es gelingt, durch Manipulation am RVS werthaltige Datensätze zu erzeugen, ohne dass das korrespondierende Pfandlogo zerstört wird. Bisher konnte die physikalische Zerstörung des Pfandlogos nicht direkt sensorisch erfasst werden, wodurch Möglichkeiten zur Manipulation entstanden ist. Mit der hier vorgestellten Lösung werden solche Manipulationsversuche wirksam verhindert. Dazu wird erfindungsgemäß in einem Mikro-Controller zusätzlich ein charakteristisches Bewegungsprofil des konkreten Schneidwerks, in dem die Zerstörung stattfindet, ermittelt, so dass die Messeinrichtung für die sensorische Erfassung der Zerstörung nicht entfernt und an ein anders Schneidwerk montiert werden kann. Dafür erhält der Mikrocontroller die Information über die Aktivität des Schneidwerkes. Weiterhin wird die Messeinrichtung zur sensorischen Erfassung der Zerstörung umhaust. Diese Umhausung (s. Sensorik 131 in Fig. 2) ist so mit dem Schneidwerk verbunden, dass ein Öffnen bzw. Entfernen elektronisch überwacht und sicher erkannt wird.

Neben der hier beschriebenen Erfassung und Auswertung von Kenngrößen kann das RVS 100 auch gegen Manipulationsversuche gesichert werden, indem zwischen mindestens zwei Komponenten des Rücknahmesystems 100, wie z.B. zwischen der Entwertungseinheit 122 und dem Gehäuse 131 für das mindestens eine Sensorelement ein Schutzelement angeordnet wird. Dies kann z.B. ein Lichtwellenleiter OWG oder eine elektrische Signalleitung sein, der/die so angeordnet ist, dass das Schutzelement bei einem Manipulationsversuch an dem durchtrennt oder zumindest beschädigt wird. Diese Lösung kann auch unabhängig von der zuvor beschriebenen Erfassung und Auswertung von Kenngrößen realisiert und eingesetzt werden.

Auch diese eigenständig ausführbare Lösung umfasst Vorrichtungen und Verfahren zum Schutz der Anlagen und Anlagenteile, welche mit einer manipulationssicheren sensorischen Überwachung des physikalischen Zerstörungsprozesses von werthaltigen Symbolen auf pfandbehafteten Objekten, ausgestattet sind. Um manipulierte Veränderung der Anlage und der Anlagenteile zu erfassen, wird eine Sende-/Empfangseinheit für eine LWL-Kommunikationsstrecke in dem System platziert. Der LWL wird anschließend durch Öffnungen oder extra dafür vorgesehene Befestigungspunkte im/am Gehäuse geführt. Die Verlegung wird entsprechend sinnvoll gewählt, dass alle Gehäuseteile und Bestandteile der Anlage so miteinander verbunden werden, dass der LWL zum Öffnen des Gehäuses durchtrennt werden muss. Ebenso wird eine Positionsveränderung der Anlagenteile zueinander nicht mehr möglich sein, ohne den LWL zu zerstören. Mittels der Sende-/Empfangseinheit wird ein codiertes Signal oder Sensorsignal gesendet. Beim Durchtrennen des LWLs geht die Maschine automatisch in Störung und eine Erzeugung von signierten Roh-Datensätzen ist nicht mehr möglich.

Die erfindungsgemäße Vorrichtung zur Manipulationserkennung kann auch zusammen mit oder separat zu den Sensoren als Modul ausgebildet sein, das als Zusatzkomponente für bestehende RVS hergestellt werden kann. Zudem kann auch die Sensorik (s. 131 in Fig. 2) zusammen mit einem Schneidwerk als integrale Komponente / Einbaumodul hergestellt werden.

### Bezugszeichenliste

- 100: Rücknahmesystem für zu entwertende Einweggüter
- 110: Fronteinheit
- 115: Erkennungseinheit (mit Sensorik für

- 120: Kompaktor
- 122: Entwertungseinheit (mit Schneidwerk)
- 123: Antrieb für Schneidwalzen
- 124a/b: Schneidwalzen

- 125: Behälter für entwertete Einweggüter

- S1, S2, Sn: Sensorelemente

- 130: Vorrichtung zur Überwachung der Entwertungseinheit
- 131: Sensorik mit mehreren Sensorelementen

- 133: Signalverarbeitungseinheit, hier Mikrocontroller
- 134: Auswerteeinheit, hier Applikation auf einem Rechner laufend

- 140: Einweggut, hier Flaschen und Dosen

- 200: Verfahren
- 210: Schritt zum Erfassen der Sensorsignale
- 220: Schritt zum Auswerten der Sensorsignale
- 230: Schritt zum Steuern der Entwertungseinheit

## Patentansprüche

1. Rücknahmesystem (100) für zu entwertende Einweggüter (140) mit einer Entwertungseinheit (122) zum Zerstören der zu entwertenden Einweggüter (140), wobei zur Manipulationserkennung mindestens ein Sensorelement (S1, S2, ... Sn) zur Erfassung mindestens einer Kenngröße (US1; US2) und eine Auswerteeinheit (134) vorgesehen sind,
wobei die Auswerteeinheit (134) die mindestens eine Kenngröße (US1, US2) auswertet, um zu prüfen, ob das Einweggut (140) von der Entwertungseinheit (122) zerstört wird, wobei die Auswerteeinheit (134) auch eine Steuerungsfunktion für das Rücknahmesystem (100) oder für Komponenten davon ausübt, und wobei die Auswerteeinheit (134) ein Steuerungssignal, eine Fehlermeldung und/oder einen Alarm erzeugt, wenn die Prüfung ergibt, dass das Einweggut (140) von der Entwertungseinheit nicht in regulärer bzw. bestimmungsgemäßer Weise zerstört wird, obwohl eine Sensorik (115) anzeigt, dass dem Rücknahmesystem (100) das zu entwertende Einweggut (140) zugeführt worden ist.
**dadurch gekennzeichnet,**
**dass** das mindestens eine Sensorelement (S1, S2, ... Sn) mindestens eine mechanische Kenngröße (US1; US2), ausgenommen Schall, erfasst, die für den Betrieb der Entwertungseinheit (122) während des Zerstörens eines Einweggutes (140) kennzeichnend ist.

2. Rücknahmesystem (100) nach Anspruch 1, **dadurch gekennzeichnet, dass** die Auswerteeinheit (134) die mindestens eine erfasste Kenngröße (US1, US2) und deren Änderung über einen Zeitraum hin anhand von Referenzdaten auswertet.

3. Rücknahmesystem (100) nach Anspruch 1 oder 2, **dadurch gekennzeichnet, dass** 10 das mindestens eine Sensorelement (S1, S2, ... Sn) ein optisches, elektrisches, magnetisches, elektromechanisches,
drucksensitives und/oder pneumatisches Sensorelement ist.

4. Rücknahmesystem (100) nach einem der vorhergehenden Ansprüche, **dadurch gekennzeichnet, dass** das mindestens eine Sensorelement (S1, S2) an der Entwertungseinheit (122) angeordnet ist, insbesondere an einem darin befindlichen Schneidwerk.

5. Rücknahmesystem (100) nach einem der vorhergehenden Ansprüche, **dadurch gekennzeichnet, dass** an der Entwertungseinheit (122), insbesondere in einer Sensorik (131), mindestens zwei oder mehr Sensorelemente (S1, S2) angeordnet sind, die unterschiedliche Kenngrößen (US1; US2) erfassen.

6. Rücknahmesystem (100) nach einem der vorhergehenden Ansprüche, **dadurch gekennzeichnet, dass** das Entwertungseinheit (122) mindestens zwei Schneidwalzen (124a, 124b) aufweist, an deren Lagerung ein erstes Sensorelement (S1) angeordnet ist, das die mechanische Kenngröße, insbesondere eine zwischen den Schneidwalzen (124a, 124b) sich ausbildende Kraft (F), erfasst.

7. Rücknahmesystem (100) nach einem der vorhergehenden Ansprüche, **dadurch gekennzeichnet, dass** das Entwertungseinheit (122) mindestens zwei Schneidwalzen (124a, 124b) und einen diese antreibenden Antrieb, insbesondere einen Kettentrieb (123), aufweist, an dem ein zweites Sensorelement (S2) angeordnet ist, wobei das Sensorelement (S2) die mechanische Kenngröße, insbesondere eine Kettenspannung des Kettentriebs (123), erfasst.

8. Rücknahmesystem (100) nach einem der vorhergehenden Ansprüche, **dadurch gekennzeichnet, dass** zwischen mindestens zwei Komponenten des Rücknahmesystems (100), insbesondere zwischen der Entwertungseinheit (122) und dem Gehäuse (131) für das mindestens eine Sensorelement ein Schutzelement, insbesondere ein Lichtwellenleiter (OWG) oder eine elektrische Signalleitung, so angeordnet ist, dass das Schutzelement bei einem Manipulationsversuch an dem Rücknahmesystem (100) durchtrennt oder zumindest beschädigt wird.

9. Vorrichtung (130) zur Manipulationserkennung und zum Einbau in ein Rücknahmesystem (100) für zu entwertende Einweggüter (140) mit einer Entwertungseinheit (122) zum Zerstören der zu entwertenden Einweggüter (140), wobei die Vorrichtung (130) zur Manipulationserkennung mindestens ein Sensorelement (S1, S2, ... Sn) zur Erfassung mindestens einer Kenngröße (US1; US2) und eine Auswerteeinheit (134) aufweist,
wobei die Auswerteeinheit (134) die mindestens eine Kenngröße (US1, US2) auswertet, um zu prüfen, ob das Einweggut (140) von der Entwertungseinheit (122) zerstört wird, wobei die Auswerteeinheit (134) auch eine Steuerungsfunktion für das Rücknahmesystem (100) oder für Komponenten davon ausübt, und wobei die Auswerteeinheit (134) ein Steuerungssignal, eine Fehlermeldung und/oder einen Alarm erzeugt, wenn die Prüfung ergibt, dass das Einweggut (140) von der Entwertungseinheit nicht in regulärer bzw. bestimmungsgemäßer Weise zerstört wird, obwohl eine Sensorik (115) anzeigt, dass dem Rücknahmesystem (100) das zu entwertende Einweggut (140) zugeführt worden ist,
**dadurch gekennzeichnet,**
**dass** das mindestens eine Sensorelement (S1, S2, ... Sn) mindestens eine mechanische Kenngröße (US1; US2), ausgenommem Schall, erfasst, die für den Betrieb der Entwertungseinheit (122) während des Zerstörens eines Einweggutes (140) kennzeichnend ist.

10. Verfahren (200) zur Manipulationserkennung an einem Rücknahmesystem (100) für zu entwertende Einweggüter (140), bei dem die zu entwertenden Einweggüter (140) mittels einer Entwertungseinheit (122) zerstört werden, wobei zur Manipulationserkennung mindestens ein Sensorelement (S1, S2, .. Sn) zur Erfassung mindestens einer Kenngröße (US1; US2) und eine Auswerteeinheit (134) vorgesehen werden,
wobei mittels der Auswerteeinheit (134) die mindestens eine Kenngröße (US1, US2) ausgewertet wird, um zu prüfen, ob das Einweggut (140) von der Entwertungseinheit (122) zerstört wird (Schritt 220),
wobei von der Auswerteeinheit (134) auch eine Steuerungsfunktion für das Rücknahmesystem (100) oder für Komponenten davon ausgeübt wird,
und wobei von der Auswerteeinheit (134) ein Steuerungssignal, eine Fehlermeldung und/oder einen Alarm erzeugt wird, wenn die Prüfung ergibt, dass das Einweggut (140) von der Entwertungseinheit nicht in regulärer bzw. bestimmungsgemäßer Weise zerstört wird, obwohl eine Sensorik (115) anzeigt, dass dem Rücknahmesystem (100) das zu entwertende Einweggut (140) zugeführt worden ist,
**dadurch gekennzeichnet,**
**dass** mittels des mindestens einen an der Entwertungseinheit (122) angeordneten Sensorelements (S1, S2, ... Sn) mindestens eine mechanische Kenngröße (US1; US2), ausgenommem Schall, erfasst wird, die für den Betrieb der Entwertungseinheit (122) während des Zerstörens eines Einweggutes (140) kennzeichnend ist (Schritt 210).

## Claims

1. Reverse vending system (100) for disposable goods (140) that are to be broken down, having a breakdown unit (122) for destroying the disposable goods (140) to be broken down, wherein for the purpose of manipulation detection there is provision for at least one sensor element (S1, S2, ... Sn) for capturing at least one characteristic quantity (US1; US2) and an evaluation unit (134),
wherein the evaluation unit (134) evaluates the at least one characteristic quantity (US1, US2) in order to check whether the disposable good (140) is destroyed by the breakdown unit (122), wherein the evaluation unit (134) also performs a control function for the reverse vending system (100) or for components thereof, and wherein the evaluation unit (134) produces a control signal, an error message and/or an alarm if the result of the check is that the disposable good (140) is not destroyed by the breakdown unit in a regular or intended manner even though a sensor system (115) indicates that the disposable good (140) to be broken down has been supplied to the reverse vending system (100),
**characterized**
**in that** the at least one sensor element (S1, S2, ... Sn) captures at least one mechanical characteristic quantity (US1; US2), with the exception of sound, that is characteristic of the operation of the breakdown unit (122) during destruction of a disposable good (140) .

2. Reverse vending system (100) according to Claim 1, **characterized in that** the evaluation unit (134) evaluates the at least one captured characteristic quantity (US1, US2) and the change therein over a period of time on the basis of reference data.

3. Reverse vending system (100) according to Claim 1 or 2, **characterized in that** the at least one sensor element (S1, S2, ..., Sn) is an optical, electrical, magnetic, electromechanical, pressure-sensitive and/or pneumatic sensor element.

4. Reverse vending system (100) according to one of the preceding claims, **characterized in that** the at least one sensor element (S1, S2) is arranged on the breakdown unit (122), in particular on a cutting mechanism situated therein.

5. Reverse vending system (100) according to one of the preceding claims, **characterized in that** at least two or more sensor elements (S1, S2) that capture different characteristic quantities (US1; US2) are arranged on the breakdown unit (122), in particular in a sensor system (131).

6. Reverse vending system (100) according to one of the preceding claims, **characterized in that** the breakdown unit (122) has at least two cutting rollers (124a, 124b), the bearing of which has a first sensor element (S1) arranged on it that captures the mechanical characteristic quantity, in particular a force (F) arising between the cutting rollers (124a, 124b) .

7. Reverse vending system (100) according to one of the preceding claims, **characterized in that** the breakdown unit (122) has at least two cutting rollers (124a, 124b) and a drive, in particular a chain drive (123), driving the latter that has a second sensor element (S2) arranged on it, wherein the sensor element (S2) captures the mechanical characteristic quantity, in particular a chain tension of the chain drive (123).

8. Reverse vending system (100) according to one of the preceding claims, **characterized in that** at least two components of the reverse vending system (100), in particular the breakdown unit (122) and the housing (131) for the at least one sensor element, have a protection element, in particular an optical waveguide (OWG) or an electrical signal line, arranged between them such that the protection element breaks or is at least damaged in the event of a manipulation attempt on the reverse vending system (100).

9. Apparatus (130) for manipulation detection and for installation in a reverse vending system (100) for disposable goods (140) that are to be broken down, having a breakdown unit (122) for destroying the disposable goods (140) to be broken down, wherein for the purpose of manipulation detection the apparatus (130) has at least one sensor element (S1, S2, ... Sn) for capturing at least one characteristic quantity (US1; US2) and an evaluation unit (134), wherein the evaluation unit (134) evaluates the at least one characteristic quantity (US1, US2) in order to check whether the disposable good (140) is destroyed by the breakdown unit (122), wherein the evaluation unit (134) also performs a control function for the reverse vending system (100) or for components thereof, and wherein the evaluation unit (134) produces a control signal, an error message and/or an alarm if the result of the check is that the disposable good (140) is not destroyed by the breakdown unit in a regular or intended manner even though a sensor system (115) indicates that the disposable good (140) to be broken down has been supplied to the reverse vending system (100),
**characterized**
**in that** the at least one sensor element (S1, S2, ... Sn) captures at least one mechanical characteristic quantity (US1; US2), with the exception of sound, that is characteristic of the operation of the breakdown unit (122) during destruction of a disposable good (140) .

10. Method (200) for manipulation detection on a reverse vending system (100) for disposable goods (140) that are to be broken down, in which the disposable goods (140) to be broken down are destroyed by means of a breakdown unit (122), wherein for the purpose of manipulation detection there is provision for at least one sensor element (S1, S2, ... Sn) for capturing at least one characteristic quantity (US1; US2) and an evaluation unit (134),
wherein the evaluation unit (134) is used to evaluate the at least one characteristic quantity (US1, US2) in order to check whether the disposable good (140) is destroyed by the breakdown unit (122) (step 220), wherein the evaluation unit (134) also performs a control function for the reverse vending system (100) or for components thereof,
and wherein the evaluation unit (134) produces a control signal, an error message and/or an alarm if the result of the check is that the disposable good (140) is not destroyed by the breakdown unit in a regular or intended manner even though a sensor system (115) indicates that the disposable good (140) to be broken down has been supplied to the reverse vending system (100),
**characterized**
**in that** the at least one sensor element (S1, S2, ... Sn) arranged on the breakdown unit (122) is used to capture at least one mechanical characteristic quantity (US1; US2), with the exception of sound, that is characteristic of the operation of the breakdown unit (122) during destruction of a disposable good (140) (step 210).

## Revendications

1. Système de recyclage (100) pour des produits jetables (140) à dévaloriser, comprenant une unité de dévalorisation (122) destinée à détruire les produits jetables (140) à dévaloriser, au moins un élément de capteur (S1, S2, ... Sn) et une unité d'évaluation étant prévus pour détecter au moins une grandeur caractéristique (US1 ; US2) et une unité d'évaluation (134),
dans lequel l'unité d'évaluation (134) évalue ladite au moins une grandeur caractéristique (US1, US2) afin de vérifier si le produit jetable (140) est détruit par l'unité de dévalorisation (122), l'unité d'évaluation (134) remplissant aussi une fonction de commande pour le système de recyclage (100) ou pour des composants de celui-ci, et dans lequel l'unité d'évaluation (134) produit un signal de commande, un message d'erreur et/ou une alarme si le résultat de la vérification indique que le produit jetable (140) n'est pas détruit normalement ou correctement par l'unité de dévalorisation bien qu'un système de capteurs (115) indique que le produit jetable (140) à dévaloriser a été amené au système de recyclage (100),
**caractérisé en ce que** ledit au moins un élément de capteur (S1, S2, ... Sn) détecte au moins une grandeur caractéristique mécanique (US1 ; US2), à l'exception du son, qui est caractéristique du fonctionnement de l'unité de dévalorisation (122) pendant la destruction d'un produit jetable (140).

2. Système de recyclage (100) selon la revendication 1, **caractérisé en ce que** l'unité d'évaluation (134) évalue ladite au moins une grandeur caractéristique (US1, US2) détectée et la variation de celle-ci pendant une période de temps à l'aide de données de référence.

3. Système de recyclage (100) selon la revendication 1 ou 2, **caractérisé en ce que** ledit au moins un élément de capteur (S1, S2, ... Sn) est un élément de capteur optique, électrique, magnétique électromagnétique, sensible à la pression et/ou pneumatique.

4. Système de recyclage (100) selon l'une quelconque des revendications précédentes, **caractérisé en ce que** ledit au moins un élément de capteur (S1, S2) est disposé sur l'unité de dévalorisation (122), en particulier sur un dispositif de coupe situé sur celui-ci.

5. Système de recyclage (100) selon l'une quelconque des revendications précédentes, **caractérisé en ce qu'**au moins deux ou plusieurs éléments de capteur (S1, S2) sont disposés sur l'unité de dévalorisation (122), en particulier dans un système de capteurs (131), et détectent différentes grandeurs caractéristiques (US1 ; US2).

6. Système de recyclage (100) selon l'une quelconque des revendications précédentes, **caractérisé en ce que** l'unité de dévalorisation (122) présente au moins deux cylindres de coupe (124a, 124b) au niveau du logement desquels est disposé un premier élément de capteur (S1) qui détecte la grandeur caractéristique mécanique, en particulier une force (F) créée entre les cylindres de coupe (124a, 124b).

7. Système de recyclage (100) selon l'une quelconque des revendications précédentes, **caractérisé en ce que** l'unité de dévalorisation (122) présente au moins deux cylindres de coupe (124a, 124b) et un entraînement qui les entraîne, en particulier un entraînement par chaîne (123), sur lequel est disposé un deuxième élément de capteur (S2), l'élément de capteur (S2) détectant la grandeur caractéristique mécanique, en particulier une tension de chaîne de l'entraînement par chaîne (123).

8. Système de recyclage (100) selon l'une quelconque des revendications précédentes, **caractérisé en ce qu'**entre au moins deux composants du système de recyclage (100), en particulier entre l'unité de dévalorisation (122) et le boîtier (131) pour ledit au moins un élément de capteur, est disposé un élément de protection, en particulier un guide d'ondes optiques (OWG) ou une ligne de signal électrique, de telle sorte que lors d'une tentative de manipulation sur le système de recyclage (100), l'élément de protection se brise ou est au moins endommagé.

9. Dispositif (130) destiné à reconnaître une manipulation et à être installé dans un système de recyclage (100) pour des produits jetables (140) à dévaloriser comprenant une unité de dévalorisation (122) destinée à détruire les produits jetables (140) à dévaloriser, le dispositif (130) de reconnaissance de manipulation présentant au moins un élément de capteur (S1, S2, ... Sn) pour détecter au moins une grandeur caractéristique (US1 ; US2) et une unité d'évaluation (134),
dans lequel l'unité d'évaluation (134) évalue ladite au moins une grandeur caractéristique (US1, US2) afin de vérifier si le produit jetable (140) est détruit par l'unité de dévalorisation (122), l'unité d'évaluation (134) remplissant aussi une fonction de commande pour le système de recyclage (100) ou pour des composants de celui-ci, et dans lequel l'unité d'évaluation (134) produit un signal de commande, un message d'erreur et/ou une alarme si le résultat de la vérification indique que le produit jetable (140) n'est pas détruit normalement ou correctement par l'unité de dévalorisation bien qu'un système de capteurs (115) indique que le produit jetable (140) à dévaloriser a été amené au système de recyclage (100),
**caractérisé en ce que** ledit au moins un élément de capteur (S1, S2, ..., Sn) détecte au moins une grandeur caractéristique mécanique (US1 ; US2), à l'exception du son, qui est caractéristique du fonctionnement de l'unité de dévalorisation (122) pendant la destruction d'un produit jetable (140).

10. Procédé (200) de reconnaissance de manipulation sur un système de recyclage (100) pour des produits jetables (140) à dévaloriser, dans lequel les produits jetables (140) à dévaloriser sont détruits au moyen d'une unité de dévalorisation (122), dans lequel au moins un élément de capteur (S1, S2, ... Sn) pour détecter au moins une grandeur caractéristique (US1 ; US2) et une unité d'évaluation (134) sont prévus pour la reconnaissance de manipulation,
dans lequel l'unité d'évaluation (134) permet d'évaluer ladite au moins une grandeur caractéristique (US1, US2) afin de vérifier si le produit jetable (140) est détruit par l'unité de dévalorisation (122) (étape 220),
dans lequel l'unité d'évaluation (134) remplit aussi une fonction de commande pour le système de recyclage (100) ou pour des composants de celui-ci, et dans lequel l'unité d'évaluation (134) produit un signal de commande, un message d'erreur et/ou une alarme si le résultat de la vérification indique que le produit jetable (140) n'est pas détruit normalement ou correctement par l'unité de dévalorisation bien qu'un système de capteurs (115) indique que le produit jetable (140) à dévaloriser a été amené au système de recyclage (100),
**caractérisé en ce que** ledit au moins un élément de capteur (S1, S2, ..., Sn), disposé sur l'unité de dévalorisation (122), permet de détecter au moins une grandeur caractéristique mécanique (US1; US2), à l'exception du son, qui est caractéristique du fonctionnement de l'unité de dévalorisation (122) pendant la destruction d'un produit jetable (140) (étape 210).
